(19) Europäisches Patentamt

European Patent Office

Office européen des brevets

(11) EP 1 506 813 A1

## (12) EUROPEAN PATENT APPLICATION

(43) Date of publication:
16.02.2005 Bulletin 2005/07

(51) Int Cl.⁷: $B01L\ 3/00$, $B01J\ 19/00$

(21) Application number: 04004238.4

(22) Date of filing: 25.02.2004

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 12.08.2003 US 640697

(71) Applicant: Hewlett-Packard Development Company, L.P.
Houston, TX 77070 (US)

(72) Inventors:
• Hernandez, Juan
San Diego California 92128 (US)

• Tom, Dennis
Corvallis Oregon 97330 (US)
• Chen, Xianggin
Corvallis Oregon 97333 (US)
• Larson, Gary
San Diego California 92127 (US)

(74) Representative: Schoppe, Fritz, Dipl.-Ing. et al
Schoppe, Zimmermann, Stöckeler & Zinkler
Patentanwälte
Postfach 246
82043 Pullach bei München (DE)

### (54) Microfluidic titration apparatus

(57) The illustrated invention defines an analytical titration chip (10) comprising an optically transparent substrate (12, 14) such as glass or plastic that defines a fluid inlet port (16), plural microfluidic sample carrying channels (32) communicating with the inlet (16), and plural titration chambers (22) fluidly communicating with the channels (32). Each titration chamber (22) contains a different concentration of the same titrant (34) to define a spectrum or range of titrations. An air management chamber (20, 56) is in fluid communication with the titration chambers (22) to facilitate capillary flow of fluid into the titration chambers (22).

FIG. 1

EP 1 506 813 A1

## Description

## Technical Field

This invention relates to apparatus for titrating fluid samples and more specifically, to an analysis chip having microfluidic sample handling channels and associated titration chambers for performing titration analysis of the sample.

## Background of the Invention

Titration is a commonly used chemical analytical procedure that is typically used to determine, for example, the concentration of a desired compound in a sample. There are of course many different procedures and techniques used to perform titration analyses. Nonetheless, stated simply, most titration methods involve the addition of measured increments of a standard solution (the ~titrant") to a sample solution to determine the stoichiometric equivalent point between the titrant and the sample. The titrant includes a known concentration of a compound that reacts with the sample in a known manner. The titrant may also include an indicator compound such as a dye that reacts when the compound in the titrant has reacted with the sampleM that is, the indicator reacts when the ~endpoint" of the reaction between the titrant and the sample occurs. The endpoint may also be indicated by some other criteria, such as pH. Regardless of what measure is used to determine endpoint, when the endpoint is reached, the two solutions are in a stoichiometric equivalence and the concentration of the desired compound in the sample may be calculated.

Although standard titrations are routinely run in many labs, the tests typically are relatively involved. For example, most titrations require that a technician who has at least a relatively sophisticated level of training prepare standard solutions, clean and set up equipment, calibrate equipment, carefully prepare solutions and run the titration. The results must then be calculated. An example illustrating the relative complexity of a routine titration analysis is the determination of the total alkalinity of a water sample having an alkalinity in the range of about 10 to 250 mUL total alkalinity (as $CaCO_3$), according to one test procedure published by the United States Environmental Protection Agency. This analysis involves titrating a measured amount of sample with acid to a predetermined pH. In addition to cleaning and setting up glassware and other equipment, the technician must prepare the stock solutions; the standard titrant for this test is 0.0200 N $H_2SO_4$, and pH buffersM typically 7.0 and 4.5M must be prepared to calibrate the pH meter. A stock alkalinity control solution is preparedM typically $Na_2CO_3$ in known concentration in distilled water. With these preparations complete, measured, incremental volumes of titrant are added to a known volume of sample until the pH reaches 4.5. The

total alkalinity as $CaCO_3$ is then calculated as (ml of titrant) x 10.

It will be appreciated that the foregoing titration procedure is time consuming and therefore expensive, relatively complex, and prone to error. In view of these and other difficulties associated with traditional titrations, there is an ongoing need for apparatus and methods for performing titrations rapidly, with accuracy and precision, at low cost and with few variables for introducing error.

Apparatus and methods addressing these needs are described in detail below. Advantages and features of the illustrated invention will become clear upon review of the following specification and drawings.

## Summary

The illustrated apparatus defines a microfluidic titration chip having a body member with a first orifice defining a fluid sample inlet port, and a plurality of microfluidic channels, each channel communicating at a first end with the sample inlet port. Each of a plurality of titration chambers fluidly communicates with a microfluidic channel and each titration chamber communicates with an air management port. Each of the titration chambers contains a titrant, and the concentration of the titrant in any one chamber is different from the concentration of the titrant in the remaining chambers.

## Brief Description of the Drawings

Fig. 1 is a top, schematic plan view of a microfluidic titration device according to one illustrated embodiment of the invention, showing the internal structures in phantom lines.

Fig. 2 is a cross sectional view of the embodiment of the microfluidic titration device illustrated in Fig. 1, taken along the line 2M2 of Fig. 1.

Fig. 3 is a cross sectional view of the embodiment of the microfluidic titration device illustrated in Fig. 1, taken along the line 3M3 of Fig. 1.

Fig. 4 is a cross sectional view of the embodiment of the microfluidic titration device illustrated in Fig. 1, taken along the line 4M4 of Fig. 1.

Fig. 5 is a top plan view of the upper layer of the embodiment of the twoNlayer microfluidic titration device illustrated in Fig. 1, showing the lower surface of the upper layer.

Fig. 6. is a top plan view of the lower layer of the embodiment of the twoNlayer microfluidic titration device illustrated in Fig. 1, showing the upper surface of the lower layer.

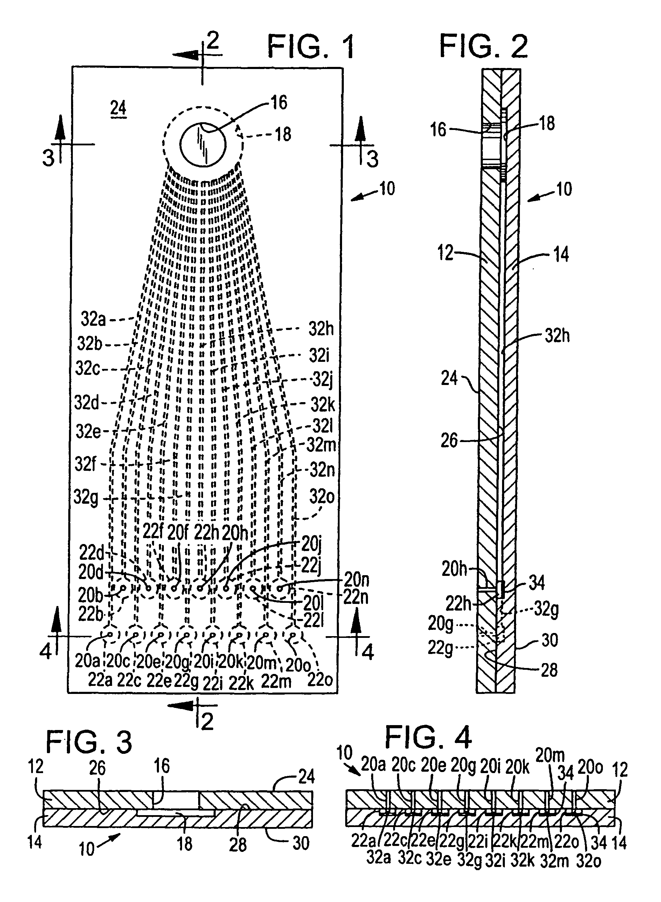

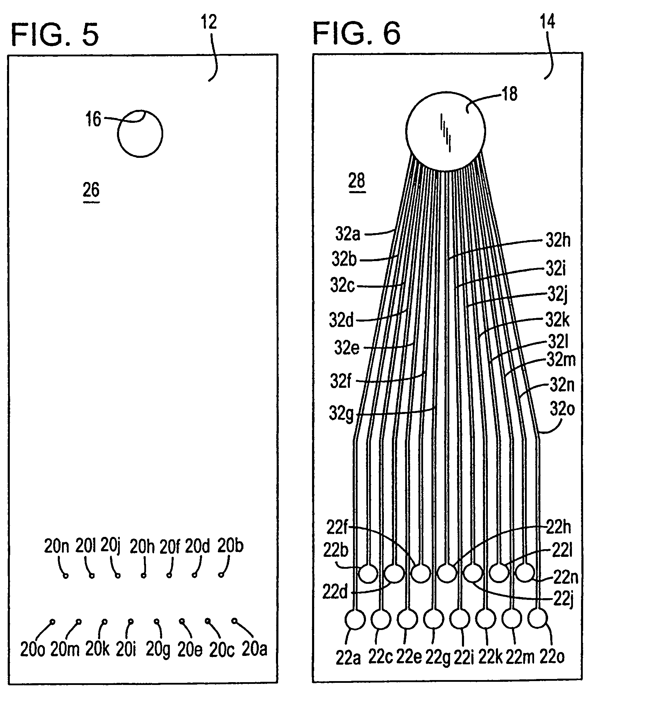

The combination of Figs. 5 and 6 show the respective upper and lower layers of the embodiment of the microfluidic titration device of Fig. 1 juxtaposed side-by-side in the manner of an opened book.

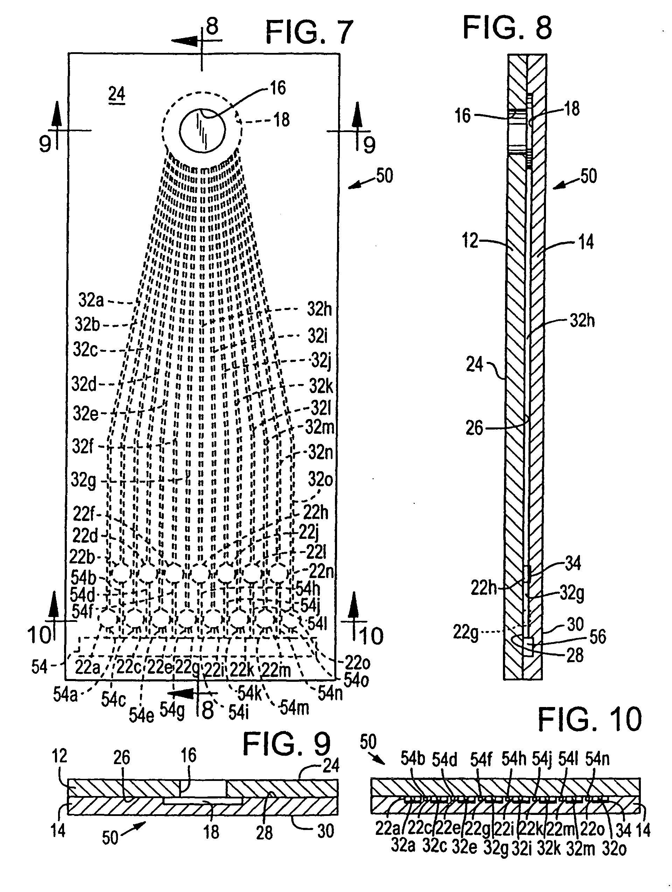

Fig. 7 is a top, schematic plan view of a microfluidic titration device according to a second illustrated embodiment of the invention, showing the internal structures in phantom lines.

Fig. 8 is a cross sectional view of the embodiment of the microfluidic titration device illustrated in Fig. 7, taken along the line 8M8 of Fig. 7.

Fig. 9 is a cross sectional view of the embodiment of the microfluidic titration device illustrated in Fig. 7, taken along the line 9M9 of Fig. 7.

Fig. 10 is a cross sectional view of the embodiment of the microfluidic titration device illustrated in Fig. 7, taken along the line 10M 10 of Fig. 7.

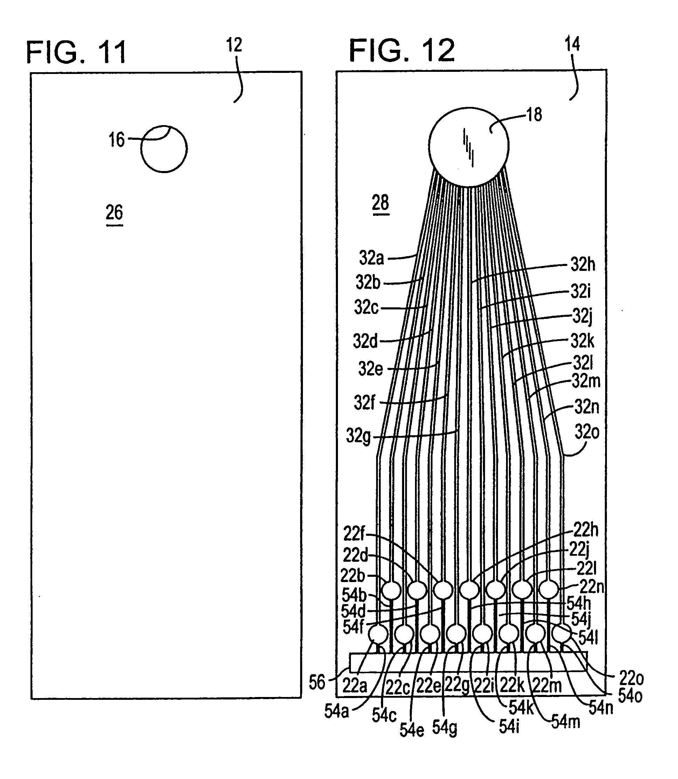

Fig. 11 is a top plan view of the upper layer of the embodiment of the twoNlayer microfluidic titration device illustrated in Fig. 7 showing the lower surface of the upper layer.

Fig. 12. is a top plan view of the embodiment of the lower layer of the twoNlayer microfluidic titration device illustrated in Fig. 7 showing the upper surface of the lower layer.

The combination of Figs. 11 and 12 show the respective upper and lower layers of the embodiment of the microfluidic titration device of Fig. 7 juxtaposed side-by-side in the manner of an opened book.

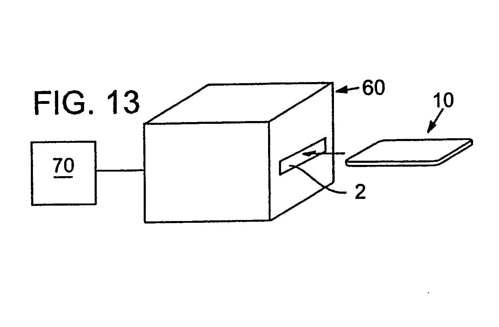

Fig. 13 is a schematic view of the embodiment of the microfluidic titration device shown in Fig. 1 and associated analytical instrumentation used to gather, compile and store analytical data from the device.

## Detailed Description of Illustrated Embodiments

The illustrated invention provides an integrated, self-contained device for titrating a fluid sample. The invention facilitates introduction of a sample into the chip, routing the sample through a plurality of microfluidic channels into plural titration chambers by passive capillary action. Each of the titration chambers is preloaded with calibrated quantity of reagents and indicators, selected according to the specific kind of titration to be performed. Each of the titration chambers is ported to an air management chamber to facilitate passive capillary movement of sample fluid from the intake port, through the microfluidic channels and into the titration chambers. Any variety of titration analyses may be performedM depending upon the reagents and indicators preloaded into the titration chambers. While the inventive apparatus may be used in numerous situations, it is especially useful for field analysis of a water sample where more traditional sample collection and analytical instruments are difficult or impossible to use. Moreover, although the invention is described herein primarily with respect to its use as an analytical device for use in sampling and analyzing water, it may just as well be used to titrate other fluids.

The illustrated invention comprises a microfluidic chip apparatus that in one embodiment incorporates plural titration chambers where the fluid sampleM for example waterM is titrated. As detailed below, each of the titration chambers is preloaded with calibrated quantities of reagents and indicatorsM the concentration of the reagent in any given titration chamber is carefully controlled, and the volume of sample in the titration chamber is known. Because each chip includes a plurality of titration chambers, each having a different concentration of ~titrant, "a range of titrations is provided in a single chip. When the sample enters the titration chambers, the indicator will change color in those titration chambers where the buffering capacity of the titration chambers has been exceeded. The chip described herein is used with an analytical instrument designed especially for use with the chip. The analytical instrument is designed to detect colorimetric changes that occur in the titration chambers. By detecting which titration chambers have exceeded the buffering capacity and which have not, the desired parameter may be easily determined with speed, accuracy and precision. The instrument may be connected to a microprocessor such as a personal digital assistant or laptop computer for rapid collection and storage of data acquired in the field. Although the analytical instrument does not form a part of the illustrated invention, it is described generally herein to facilitate understanding of the invention.

A first illustrated embodiment of a single microfluidic titration chip 10 is illustrated in Figs. 1 through 6. Fig. 1 is a schematic reproduction in a graphic form of microfluidic titration chip 10, which is configured for the performance of titration analysis in accordance with one aspect of the illustrated invention. It will be appreciated that chip 10 illustrated in Fig. 1 is shown in a highly schematic fashion to provide detailed information about the structure and operation of the chip.

With reference to Fig. 2, chip 10 comprises a composite substrate having an upper layer 12 and a lower layer 14. As described below, each layer 12 and 14 is separately fabricated. The two layers 12 and 14 may be fabricated from a variety of materials, including glasses, silicon materials and even plastics, so long as materials used have adequate optical clarity and material compatibility characteristics.

Upper layer 12 is an orifice-containing plate that defines a sample inlet port 16 that communicates with a sample distribution chamber 18 formed in lower layer 14. In the embodiment illustrated in Figs. 1 through 6, upper layer 12 further includes plural air management ports, labeled 20a through 20o. Each air management port 20a through 20o fluidly communicates with and is thus associated with a respective different titration chamber formed in lower 14. In Figs. 1 through 4 the titration chambers are labeled 22a through 22o.

Sample inlet port 16 defines an opening through the upper surface 24 of upper layer 12 that extends completely through the upper layer to lower surface 26 so that the opening defines a fluid pathway into the sample distribution chamber 18 in lower layer 14. Fig. 2. A plurality of fluid-carrying microfluidic channels 32 is formed in the upper surface 28 of the lower layer 14. The lower surface of lower layer 14 is labeled with reference number 30. In Fig. 1 there are fifteen separate microfluidic channels 32, labeled 32a through 32o. Each channel 32 defines a fluid flow path that communicates at a first end from the sample distribution chamber 18 and at a second end to a respective titration chamber 22. The microfluidic channels 32 are sized so that the fluid to be analyzed (*e.g.* water) flows through the channels and into the titration chambers. As noted above, the air management ports 20 fluidly communicated with the associated titration chambers. However, the air management ports 20, which define openings from the upper surface 24 into the titration chambers, are sized so that the fluid to be analyzed can not flow into the ports 20. The air management ports 20 are provided to control and manage sample fluid movement through the fluid-carrying microfluidic channels 32 and into the titration chambers by facilitating capillary fluid flow. The term ~passive capillarity" is used at times herein because the capillary fluid flow through chip 10 is not induced with any active mechanisms. The air management function provided by air management ports 20, which are open to atmosphere as illustrated in Fig. 1, may instead be provided by a chamber that defines an air management port that is not open to atmosphere. An example of this structure is shown in Figs. 7 through 12, described below.

As noted, each of the titration chambers 22a through 22o is configured for performing chemical reaction-based titration analyses that results in colorimetric changes that are detected by an appropriate detector such as the analytical instrument 60 described below. To facilitate the desired chemical reactions in the chambers, reagents and colorimetric indicators and the like are preloaded into the titration chambers before the upper layer 12 and lower layer 14 are bonded together. Thus, and by way of example only, chip 10 may be configured for titrating the alkalinity of water. As such, each of the titration chambers 22a through 22o will be preloaded with a calibrated, known concentration of the reagents appropriate for titrating alkalinity. The concentration of reagent in any single titration chamber will be different from the concentration of reagent in another chamber. Since the volume of each titration chamber 22 is known (and thus the volume of liquid sample to be titrated is known) and is the same as each other titration chamber, the quantity of reagent preloaded into any given titration chamber may be calculated so that a graduated range of titrations are provided. The word ~titrant"is used generically herein to refer to the various chemicals, stabilizers and indicators necessary to perform a specific titration. The specific titrant used in any chip 10 depends upon the type of titration being performed.

For example, and with reference to Fig. 4, the titrant is represented with reference number 34. The concentration of titrant 34 in titration chamber 22a may be represented by the naming convention [34/22a]M that is, ~[34/22a]" represents the concentration of titrant 34 in titration chamber 22a. Following this convention, the concentration of titrant 34 in the next adjacent titration chamber 22b is represented by [34/22b]. In one embodiment, the concentration of titrant in the plurality of titration chambers 22 may be as follows:

$$[34/22a] < [34/22b] < [34/22c] < [34/22d] \ldots < [34/22o]$$

Thus, the concentration of titrant 34 in each titration chamber increases from titration chamber 22a, which has the lowest concentration of titrant, to chamber 22o, which has the greatest concentration. The absolute concentration and amount of the titrant 34 depends of course on many factors, including the specific titration being performed, the volume of the titration chamber, the reagents used, etc. and may be set according to need. In any event, the concentration range of titrant 34 from titration chamber 22a to titration chamber 22o is designed to cover the range of possible results for a given titration.

The number of titration chambers may be varied widely from the fifteen titration chambers illustrated in Fig. 1, and the difference in the concentration of titrant between adjacent titration chambers may similarly be varied widely according to need. In general, the relationship of concentration of titrant T in the various titration chambers in a chip 10 containing n titration chambers is as follows:

$$[T_1] < [T_2] < [T_3] < [T_4] \ldots [T_n]$$

In a first preferred embodiment, the difference in concentration of the titrant 34 between $T_1$ and $T_2$ is the same as the difference in the concentration of titrant between $T_2$ and $T_3$, etc. Thus, the titration chambers are configured in a linear sequential gradient with each step in the gradient from one titration chamber to the next being equivalent in terms of the concentration of titrant. It will be appreciated that the incremental increase in the concentration of titrant from one titration chamber to the next need not be linear, and could for example follow a logarithmic concentration gradient, in which case the concentration range covered by chip 10 could be greater. Moreover, it will be appreciated that when a titration reaction is being carried out, the indicator solutions typically do not change colors in an on / off manner. Stated another way, the color change caused by the indicator tends to be reflected in a gradual hue shift. As an example, phenol red, an indicator commonly used in pH titrations, tends to exhibit a hue shift over a relatively wide pH rangeM up to 1 pH. The stoichiometric equivalence point thus may be determined by analysis of the hue shift in two or more titration chambers.

The titrant 34 is preferably confined in the titration chambers during fabrication of the chip 10, as illustrated schematically in Fig. 4. In the case where titrant 34 is a solid, the titrant may simply be deposited in the chambers (a different, calibrated amount of titrant is deposited in each sequential chamber). In the case where the titrant is of a type that is not easily confined to the titration chambers, it is advantageous to deposit a non-reacting matrix compound in the titration chamber during fabrication of chip 10 for the purpose of either physically entrapping or chemically binding the titrants, thereby maintaining the titrants in the titration chamber prior to the time when a sample is introduced. There are many suitable matrix compounds that may be used for this purpose. For example, polyvinyl alcohol (PVA) or a nylon deposited on the interior surface of the titration chambers forms a physical matrix structure that is capable of entrapping various titrants 34. Other, sorbant-type materials may similarly be used to attract or bind both organic and inorganic titrant compounds, and may be combined with matrix compounds for binding titrants. Suitable sorbants include the classes of chemical sorbants commonly used in chromatographic columns. There are a wide variety of such sorbants available on the commercial market, and the specific type of sorbants selected depends upon numerous factors, including the type of test that is being run and the titrants used in the test, the size of the molecules involved, polarity, solubility, the environmental operating conditions, etc. Sorbants such as cross-linked cellulose or agarose, adsorbents used in liquid chromatography, and sorbants of the types often used in thin board chromatography may be used. Preferably, any matrix compounds and sorbant materials that are used are capable of being easily coated onto the walls of the titration chambers, for example by applying a monolayer of the materials with techniques such as low volume fluid dispensing.

Fig. 5 illustrates upper layer 12 of chip 10, and in particular, the lower surface 26 of upper layer 12. Fig. 6 shows the upper surface 28 of lower layer 14. Figs. 5 and 6 are laid out in a side-by-side manner to illustrate the two layers 12 and 14 disassembled from one another and juxtaposed next to one another in the manner of an open book. That is, in the view shown in Figs. 5 and 6, the lower surface 26 of upper layer 12 is visible, and upper surface 28 of lower layer 14 is visible; these two surfaces (26 and 28) are mated to one another when the chip is assembled. In this view the various ports, titration chambers and microfluidic channels may clearly be seenM when the two layers 12 and 14 are assembled (as described below) into chip 10, the chip resembles the form shown in Fig. 1. It should be pointed out that a chip 10 according to the illustrated embodiments may be fabricated with the relative positions of the inlet port 16, microfluidic channels 32, and titration chambers 22 arranged differently from those positions shown in the figures. As one example, a chip 10 may have the microfluidic channels 32 formed into the lower surface 26 of upper layer 12, titration chambers 32 formed in the upper surface 28 of lower board 14, etc. Those having skill in the art will appreciate that the positions of these structures may be adjusted widely within the scope of the claimed invention.

The chip 50 shown in the embodiment illustrated in Figs. 7 through 12 is identical to the chip 10 shown in Figs. 1 through 6 except chip 50 uses a different type of air management chamber, and specifically, an air management chamber that is not open to the atmosphere. The same reference numbers used in connection with Figs. 1 through 6 are used to identify like structures in Figs. 7 through 12. Referring to Fig. 7, each of the titration chambers 22a through 22o fluidly communicates with the sample distribution chamber 18 via a microfluidic channel 32. However, the air management ports 20a through 20o shown in the embodiment of Fig. 1, which as noted in the embodiment of Fig. 1 are open to atmosphere, are replaced with microfluidic channels 54a through 54o (each associated with a respective titration chamber) that define a fluid pathway extending from the titration chambers 22 to an air management chamber 56. Air management chamber 56 is an enclosed void formed in chip 10 that has a volume that is significantly greater than the volume of the combined volumes of the titration chambers 22 and the microfluidic channels 32. Although air management chamber 56 is not open to the atmosphere, it has a large enough volume to accept all air displaced from the microfluidic channels 32a through 32o and titration chambers 22a through 22o by sample flowing into the chambers. As with air management ports 20 described above, microfluidic channels 54 are sized such that the fluid sample (*e.g.* water) can not enter the channels, but displace air does flow through the channels. Again, flow of fluid into the titration chambers with passive capillarity is enhanced because air but not water will flow through the channels 54. Moreover, because sample will not flow into channels 54, the entire volume of the titration chambers 22 is filled with fluid sample. Because the volume of the titration chambers is known, the concentration of titrant deposited in any given titration chamber may be calculated.

Various materials may be used to fabricate chip 10, including a variety of glasses, quartz, and plastics. Typically, both the upper layer and lower layer 12 and 14 are formed from the same material. Regardless of the material used to fabricate the chip, at least one of the two layers and preferably both layers are optically transparent so that, as detailed below, light from a light source in an analytical instrument 60 or other detector may be transmitted through the board material so that the analytical instrument detects colorimetric changes that occur in the titration chambers. Beginning with lower layer 14, the distribution chamber 18, microfluidic channels 32, and titration chambers 22 are etched into the upper surface 24 (assuming that the material used to form layer 14 may be etched). If a plastic is used, the channels and chambers may be molded into the layer. The etching process is controlled so that the volume of the titration chambers is controlled and known. If the air management chamber being used is the type shown in Figs. 7 through 10, then the air management chamber is etched into the lower layer at this time. The titrant 34, which as noted includes all necessary chemicals for the particular titration, is then fixed into the titration chambers 22. In each of the titration chambers, a different calibrated amount of titrant 34 is added, and so as to present a range of buffering capacity across the titration chambers. If a supporting matrix is used to bind the titrant 34 in the titration chambers, the matrix may be dip coated or layered over the chambers by masking the portions of the lower layer 14 where matrix should not be deposited. Titrant 34 may then be deposited in any appropriate way, for example with micropipettes, or quill-type micro dispensers. Alternately, the matrix and the titrant may be combined and applied in a series of sequential coating and masking steps.

The orifices in upper layer 12, such as sample inlet port 16 and, if used, air management ports 22, are formed for example by drilling the substrate with a laser drill or other appropriate tool. The orifices are positioned on upper layer 12 such that the orifices align in the desired orientation with the various structures on lower layer 14 when the two layers are assembled.

The two layers 12 and 14 are then oriented in a face-to-face mannerM that is, with upper surface 28 of lower layer 14 facing lower surface 26 of upper layer 12, and with the orifices in upper layer 12 properly aligned with the corresponding structures in lower layer 14, and the two layers are bonded together in this desired orientation. The boards may be bonded together in any appropriate manner, for example with non-water soluble adhesives, encapsulation, thermal compression, or a polyamide and / or thermoset film. The manner of bonding the two layers together is chosen to not introduce contaminants or to degrade any titrants in the titration chambers. The upper layer effectively closes the titration chambers and the microfluidic channels. The bonded, finished chip 10 may be used alone or affixed to another structure such as a carrier to facilitate easy handling of the chip, which may be quite small.

The size and scale of chip 10 varies depending on factors such as the desired type of titration, the fluid to be titrated, cost, etc. The ~depth" of the microfluidic channels 32 and the titration chambers may vary from a few microns up to several millimeters. Moreover, the ~depth" of the titration chambers may be varied to facilitate holding a greater or lesser volume of sample. Chip 10 may be most any shape, including rectangular as shown, square, elliptical, circular or other. With a square chip, the side measurements may be from about 0.5 millimeters up to nearly any size.

Both upper layer 12 and lower layer 14 are preferably optically transparent. However, the chip 10 may be fabricated with only one of the layers being transparent. Further, in some instances, a thin reflective film, the purpose of which is described in greater detail below, may be deposited onto a surface of one of the boards, such as lower surface 30 of lower layer 14 if desired. The reflective film assists in scattering light from analytical instrument 60 that is transmitted onto chip 10 during analytical analysis.

A standard titration is run by first introducing a fluid sample into sample inlet port 16. The sample may be introduced into the inlet port in any convenient manner, such as with a dropper or pipette, syringe or injection needle, or for example by immersing the chip itself into a fluid sample so that the inlet port is below the surface of the fluid. It should be noted the sample inlet port 16 may be replaced with other equivalent structures for routing a water sample into the chip 10, including for example injection needles and the like. In any case, the sample flows through inlet port 20 and fills sample distribution chamber 18 from which the sample is drawn into each of the microfluidic channels 32. The sample is drawn through the channels 32 by passive capillarity and into the associated titration chambersM that is, the water sample flows into the reaction chambers without the need for an active mechanism for inducing fluid flow. Air that is displaced from the channels 32 and associated titration chambers 22 by the fluid is ported through the air management ports 20. Because the air management ports are sized small enough that air flows through the ports but fluid cannot (for example, in the example where water is being titrated, surface tension prevents the water from flowing into the air management ports), the titration chambers are entirely filled with sample fluid.

When glass is used to form the layers 12 and 14 and the glass is sufficiency clean, the capillarity of the microfluidic channels has been found to be sufficient. Nonetheless, the sample inlet port 16 and the microfluidic channels 34 may optionally be treated with coatings or surface modification methods to assist in capillarity by, for example, preventing a meniscus from forming in the inlet port and at the interface between the sample distribution chamber 18 and the microfluidic channels 32. The specific type of surface treatment depends upon the material used to manufacture the board 12. For example, some materials such as certain glasses may be cleaned according to SC1 clean techniques. In other cases, such as with various plastics, thin layers or monolayer coatings that improve flow characteristics, such as self-assembled monolayers, may be applied to the substrate. The air management ports 20, as noted, facilitate the capillary flow of fluid through the microfluidic channels 32 and into the titration chambers 22 and ensure that the fluid sample flows into and fills each titration chamber, by allowing air displaced by the sample as it moves through the microfluidic channels to be released through the ports 20. Again, the function of air management ports 20, which in the embodiment illustrated in Fig. 1, is ported to the atmosphere, may be equivalently performed by a closed air management chamber fluidly connected to the titration chambers, such as shown in Fig. 7.

When a sample enters titration chambers 22 the titrant 34 contained in the titration chambers 22 intermix and react with the sample. With the chip 10 shown in the figures there are fifteen different titration chambers, and each on has a different concentration of titrant 34 as described above to cover the desired range. As the reaction between titrant 34 and the sample takes place, in those titration chambers where the buffering capacity is exceeded, the dye or indicator that is included in titrant 34 will cause a color change to occur. In those titration chambers where the buffering capacity is not exceeded, no color change will occur. The end point of the titration thus lies between the unchanged titration chamber and the adjacent titration chamber where a color change has occurred. The degree of resolutionM that is, the accuracy of the titration end point, depends upon the incremental change in buffering capacity between adjacent titration chambers. Because there are plural titration chambers, each having a different concentration of titrant, the chip 10 essentially performs plural simultaneous titrationsM one separate titration is carried on in each titration chamber. The end point of the titration is between the last titration chamber not exhibiting a color change and the chamber in the series that changes color. Because there will typically be a hue shift that occurs between several of the titration chambersM the intensity of the shift depending upon factors such as the concentration range of titrant, etcM the end point may be determined by calculation based on the known concentration of titrant in the pertinent titration chambers.

The color changes in the titration chambers may in some instances be detectable with the human eye, either unaided or through a magnifying apparatus such as micro or macroscopic magnification. More typically, an analytical instrument is used to determine the end point of the titration.

With reference now to Fig. 13, an analytical instrument 60 is configured for determining in which titration chambers a color change has occurred. Analytical instrument 60 is shown and described in a general manner herein to provide some context for an analytical instrument used with chip 10. Analytical instrument 60 includes optical components suited for detecting colorimetric changes in a sample held in titration chambers 22, and reporting the results of the analysis in the form of data that may be saved in internal memory in analytical instrument 60, and/or output to a computer 70. In a preferred embodiment, analytical instrument 60 is a self-contained unit that is easily transported into the field, and computer 70 is a portable unit such as a handheld or laptop computer.

When a sample (for example, water) is introduced into the microfluidic titration chip 10 and the associated titration chambers 22, the chip 10 is allowed sufficient time for the titration reactions to take place. Any color changes that occur in titration chambers where the buffering capacity is exceeded are detectable by the optical character of light that is either transmitted through the chip 10 in analytical instrument 60, or in the instance where a reflective film is applied to a surface of the chip, light that is transmitted through the sample und reflected from the reflective film to an appropriate detector in the instrument.

As noted, in some instances a thin reflective film may be applied to a surface of one of the boards, for example lower surface 30 of lower layer 14. The reflective film is preferably a white film that serves to optically scatter light from the light source in analytical instrument 60, but which also may be a reflective film such as aluminum. When this type of construction is used, light from the light source in analytical instrument 60 is reflected off the reflective film and is transmitted to the detector.

In any event, once the identity of the two titration chambers where the end point has occurred is known, or alternately, a series of titration chambers exhibiting a hue shift, the result of the titration may be calculated. For example, if the chip 10 is configured for titration the alkalinity of water, the result may be obtained by calculating from the known concentration of titrant in the two titration chambersM that is, the last chamber where the buffering capacity was exceeded (and a color change occurred) and the adjacent chamber where the buffering capacity was not exceeded (and no color change occurred). The precision of the calculated result depends upon the incremental change in concentration between these two titration chambers. The analyzer is programmed to calculate the end point based on the concentration of titrant in the various titration chambers.

Having here described illustrated embodiments of the invention, it is anticipated that other modifications may be made thereto within the scope of the invention by those of ordinary skill in the art. It will thus be appreciated and understood that the spirit and scope of the invention is not limited to those embodiments, but extend to the various modifications and equivalents as defined in the appended claims.

**Claims**

1. Apparatus for titration, comprising:

   a body member (10) having;

   a first orifice defining a fluid sample inlet port (16) into the body;

   a plurality of microfluidic channels (32), each channel communicating at a first end with the sample inlet port (16);

   a plurality of titration chambers (22), each fluidly communicating with a microfluidic channel (32) and each fluidly communicating with an air management port (20); and

   each titration chamber (22) in the plurality contains a titrant (34), wherein the concentration of the titrant (34) in any one chamber (22) in the plurality is different from the concentration of the titrant (34) in the remaining chambers (22).

2. Apparatus according to claim 1 wherein the titrant (34) is configured for titrating a sample for a predetermined attribute and includes buffering agents and indicators.

3. Apparatus according to claim 1 wherein the plurality of titration chambers (22) is defined as chambers $T_1$ through $T_n$, and wherein the concentration of titrant (34) in chamber $T_1$ is less than the concentration of titrant (34) in chamber $T_n$.

4. Apparatus according to claim 3 wherein the plurality of titration chambers (22) is defined as chambers $T_1$, $T_2$ ... $T_n$, and wherein the concentration of titrant (34) in chamber $T_2$ is greater than the concentration of titrant (34) in chamber $T_1$ by a predetermined incremental amount.

5. Apparatus according to claim 4 wherein the difference in the concentration of titrant (34) between adjacent titration chambers (22) increases linearly from $T_1$ to $T_n$.

6. Apparatus according to claim 4 wherein the difference in the concentration of titrant (34) between adjacent titration chambers (22) increases logarithmically from $T_1$ to $T_n$.

7. A method of titrating a fluid for a predetermined chemical attribute, comprising the steps of:

   (a) providing a microfluidic chip (10) having a plurality of titration chambers (22), each having a known concentration of titrant (34) for titrating the fluid for the predetermined chemical attribute and such that the plurality of titration chambers (22) define a graduated range of concentrations of the titrant (34);

   (b) introducing a fluid into an inlet (16) in the chip (10);

   (c) inducing a flow of the fluid by capillarity from the inlet (16) through a plurality of fluid pathways (32) in the chip (10), each of the fluid pathways (32) communicating with a titration chamber (22), and allowing the fluid to fill each titration chamber (22);

   (d) allowing the fluid to react with the titrant (34) in each titration chamber (22);

   (e) observing the titration chambers (22) and identifying the titration chambers (22) where a color change has occurred and the titration chambers (20) where no color change has occurred.

8. The method of claim 7 wherein the endpoint of the titration is determined by identifying titration chambers (22) in which a color change has occurred and in which no color change has occurred.

9. The method of claim 7 in which step (c) includes the step of allowing air displaced from the pathways (32) and titration chambers (22) to escape from the titration chambers (22).

10. A method of determining the end point of a titration, comprising the steps of:

    (a) in a microfluidic chip (10) having plural titration chambers (22), introducing a sample fluid into each titration chamber (22) and reacting the fluid in each titration chamber with titrant (34) to complete a separate titration in each of the titration chambers (22).

# FIG. 1

# FIG. 2

# FIG. 3

# FIG. 4

# FIG. 5

12

16

26

20n 20l 20j 20h 20f 20d 20b

20o 20m 20k 20i 20g 20e 20c 20a

# FIG. 6

14

18

28

32a     32h
32b     32i
32c     32j
32d     32k
32e     32l
    32m
32f     32n
32g     32o

22f     22h
22b     22l
    22n
22d     22j

22a 22c 22e 22g 22i 22k 22m 22o

FIG. 7

FIG. 8

FIG. 9

FIG. 10

# FIG. 11

12

16

26

# FIG. 12

14

18

28

32a
32b
32c
32d
32e
32f
32g

32h
32i
32j
32k
32l
32m
32n
32o

22f
22d
22b
54b
54d
54f

22h
22j
22l
22n
54h
54j
54l

56
22a  22c  22e  22g  22i  22k  22m

22o
54o

54a
54c
54e  54g
54i
54k
54m
54n

FIG. 13

**European Patent**

**Office**

**EUROPEAN SEARCH REPORT**

Application Number

EP 04 00 4238

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 101 64 357 A (ADVALYTIX AG) 10 July 2003 (2003-07-10) * paragraphs [0023] - [0035] * ----- | 1,7 | B01L3/00 B01J19/00 |
| A | EP 1 202 057 A (MICRONIX INC) 2 May 2002 (2002-05-02) * paragraphs [0035], [0036]; figure 5 * ----- | 1,7 | |

TECHNICAL FIELDS
SEARCHED      (Int.Cl.7)

B01L
B01J

The present search report has been drawn up for all claims

| Place of search | Date of completion of the search | Examiner |
|---|---|---|
| Munich | 6 December 2004 | Tragoustis, M |

## ANNEX TO THE EUROPEAN SEARCH REPORT
## ON EUROPEAN PATENT APPLICATION NO.

EP 04 00 4238

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2004

| Patent document cited in search report | | Publication date | Patent family member(s) | | Publication date |
|---|---|---|---|---|---|
| DE 10164357 | A | 10-07-2003 | DE | 10164357 A1 | 10-07-2003 |
| | | | WO | 03056324 A2 | 10-07-2003 |
| EP 1202057 | A | 02-05-2002 | US | 6696240 B1 | 24-02-2004 |
| | | | CA | 2360194 A1 | 25-04-2002 |
| | | | EP | 1202057 A2 | 02-05-2002 |

EPO FORM P0459

For more details about this annex : see Official Journal of the European Patent Office, No. 12/82